# EUROPEAN PATENT SPECIFICATION

(11) **EP 2 503 276 B1**
(45) Date of publication and mention of the grant of the patent: **19.06.2013**
(21) Application number: 12160044.9
(22) Date of filing: 19.03.2012
(51) Int. Cl.: F28D 20/00, F24D 11/02, F24H 7/04

(54) **A radiator for ambient heating.**
Heizkörper zur Umgebungserhitzung
Radiateur pour le chauffage ambiant

(30) Priority: 24.03.2011 IT AN20110038
(43) Date of publication of application: 26.09.2012
(73) Proprietor: A 2 B Accorroni E.G. S.R.L., 60027 OSimo (AN) (IT)
(72) Inventor: Accorroni, Sergio, 60027 Osimo (AN) (IT); Del Zoppo, Antonio, 35020 Ponte San Nicolo' (PD) (IT)
(74) Representative: Baldi, Claudio

(56) References cited:
- DE-A1- 3 212 369
- DE-A1-102009 001 169
- DE-B3-102008 018 878
- FR-A1- 2 778 730
- GB-A- 2 450 633

## Description

The present invention relates to a radiator for heating of domestic and commercial spaces.

In particular, DE 3 212 369 A1 discloses a radiator comprising a storage tank, a first thermal exchange coil housed in said storage tank and being part of a circuit of a heat pump, the hot storage tank being used for domestic water. This document represents the closest prior art to the subject-matter of claim 1.

Devices of this kind are generally known and comprise a series of passages for a heating fluid, being normally connected to a boiler installed in a boiler room (normally outside the house) that heats the fluid that circulates inside said radiators.

The boiler is typically fed by a distribution network of methane gas or the like, and heats the fluid circulating in suitable coils inside the boiler by means of thermal exchange.

The boiler is often used also to produce hot domestic water by means of a secondary circuit that takes water from the domestic water network and conveys it first to the boiler (where it is heated) and then to the taps of the house.

Other solutions are known using a heat pump to produce hot air that is introduced in the domestic spaces by means of local distribution devices, the so-called splits.

These installations use the thermodynamic compression cycle that produces a refrigerating effect because of the absorption of heat from outside, at low temperature, produced by the evaporation of refrigerant fluids, such as R407C, R410A or R134A.

In brief, the liquid refrigerant fluid reaches the evaporator - external heat exchanger through the expansion valve and evaporates, taking heat from external air. Then, the fluid is extracted by the compressor that compresses it and pushes it as steam in the condenser - internal heat exchanger - where it condenses and yields heat to the indoor space or to a fluid. Finally the refrigerant, at high pressure and in liquid state, passes through the lamination element that feeds the external heat exchanger, and evaporates, thus repeating the cycle.

Obviously, in order to produce the heat necessary to heat the indoor ambient of the house, the refrigerant temperature in the external exchanger - evaporator must be lower than the temperature of the atmospheric air of the outdoor ambient.

Other heating solutions consist in gas radiators or stoves that do not produce hot domestic water and therefore also these solutions cannot completely satisfy the requirements of domestic and non-domestic users.

Although effective, these solutions do not completely satisfy the requirements of a domestic ambient in terms of heating and hot domestic water production.

The purpose of the present invention is to remedy these and other problems by devising an improved radiator used to heat domestic spaces.

In particular, the radiator for production of heat for domestic spaces according to the present invention is made according to the first attached claim and also comprises, as additional advantageous characteristics, the features illustrated in the attached subclaims.

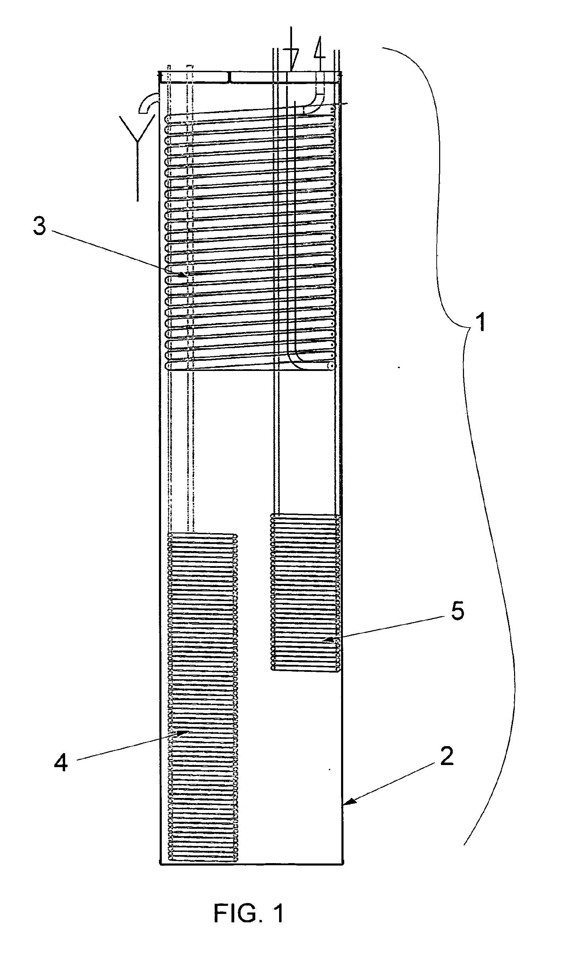

Said characteristics and relevant advantages will be clearer from an embodiment of the invention with reference to the enclosed drawings, which show an example of embodiment, for illustrative, not limiting purpose, wherein
- Fig. 1 is a diagram of a radiator of the invention;
- Fig. 2 is a diagram of the radiator of Fig. 1 connected to utilities and heat sources;
- Fig. 3 is a diagram of a first embodiment of the radiator of Fig. 1 connected to a convective fan for air;
- Fig. 4 is a diagram of a second embodiment of the radiator of Fig. 1 connected to a floor radiant system;
- Fig. 5 is a diagram of a third embodiment of the radiator of Fig. 1 connected to a natural circulation thermo-siphon;
- Fig. 6 is a diagram of the radiator of Fig. 4 connected to a forced circulation thermo-siphon;
- Fig. 7 is a diagram of the radiator of Fig. 4 connected to a fan coil;
- Figs. 8 and 9 are installation examples of the radiator of the aforementioned figures.

The enclosed figures illustrate a basic embodiment of the radiator (1) of the invention; in particular, according to this embodiment, the radiator (1) comprises a storage tank (2) that houses a first (3), a second (4) and a third (5) coil.

In operating condition the storage tank (2) contains a certain quantity of water, for example 130 liters.

The first coil (3) is for production of hot domestic water. In fact, water for sanitary facilities (sinks and showers, mainly) flows inside it, being heated by means of thermal exchange with the water of the storage tank (2).

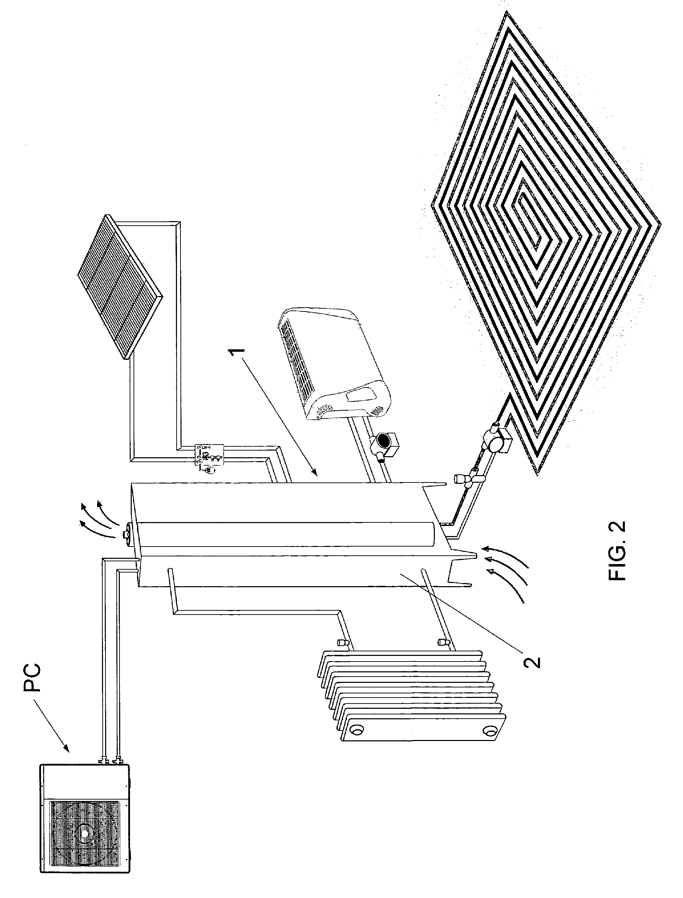

The second coil (4) is part of the operating circuit of the heat pump (PC) shown in Fig. 2 and connected to the radiator (1). Hot cooling fluid (i.e. R410A) circulates inside it and condensates yielding heat to the water contained in the storage tank (2).

In the example given, the third coil (5) is connected to a solar collector (for example, a solar panel). Hot fluid coming from said collector circulates inside it, yielding heat during its passage to the water contained in the storage tank (2).

It must be noted that the third coil (5) may be connected to a burner for biomasses, to a standard boiler or more generally to any heat source adapted to heat a fluid circulating inside it.

Moreover, it must be noted that further embodiments of the radiator comprise a plurality of coils connected to heat sources of any kind, such as the ones listed above, or different ones, adapted to heat the fluids circulating inside said coils.

In the example given the radiator (1) has a basically parallelepiped shape and is externally insulated.

The shape can be modified to meet the architectural installation requirements and may be spherical, semi-spherical, cubic or the like.

Insulation preferably comprises a layer of rock wool, glass wool or the like.

The storage tank (2) is preferably connected to the water distribution system by means of inlet conduit and output conduit (not shown in the attached figures), in order to be filled with water that will be heated by the thermal exchange with the heat transfer fluid circulating in the second (4) and/or third coil (5).

The improved radiator (1) in the aforementioned embodiment has a useful volume from 80 to 360 liters, preferably 130 liters, and is adapted to heat hot water for sanitary facilities as well as the space where it is installed by simple convection of ambient air against the walls of the tank, eventually eliminating insulation or reducing the thermal-insulating capability of the latter.

Advantageously, the improved radiator (1) does not need to be provided with anti-legionnaire's disease device, thus considerably simplifying the control of hot water production for domestic use because, due to its small internal volume, the coil for hot water does not create storage and does not produce a suitable environment for legionnaire's disease proliferation. The first coil (3) for hot domestic water can be single or multiple, for example, to satisfy multiple utilities with separate collection points simplifying the use of alternative heat sources in case of small condominiums where common solar panels are installed, without being forced to calculate the quantity of hot water for sanitary facilities with expensive meters.

As mentioned above and shown in Fig. 2, the second coil (4) of the radiator (1) is connected to a heat pump (PC) with motoevaporating unit to be installed outside the building, for example a heat pump from 9,000 to 60,000 BTU/h with suitable hermetic compressor that uses R410A or the like as refrigerant fluid. One BT equals 1.055 K JOULES.

As shown in Fig. 2, the improved radiator (1) can also be used to feed other utilities (such as radiators, fan coils or the like) it being connected to them by means of suitable feed conduits branching off from the storage tank (2).

In fact, the radiator (1) can also be used to heat spaces other than the one where it is installed, for example by feeding remote utilities, such as peripheral radiators or other terminal units, such as fan coils or floor radiators.

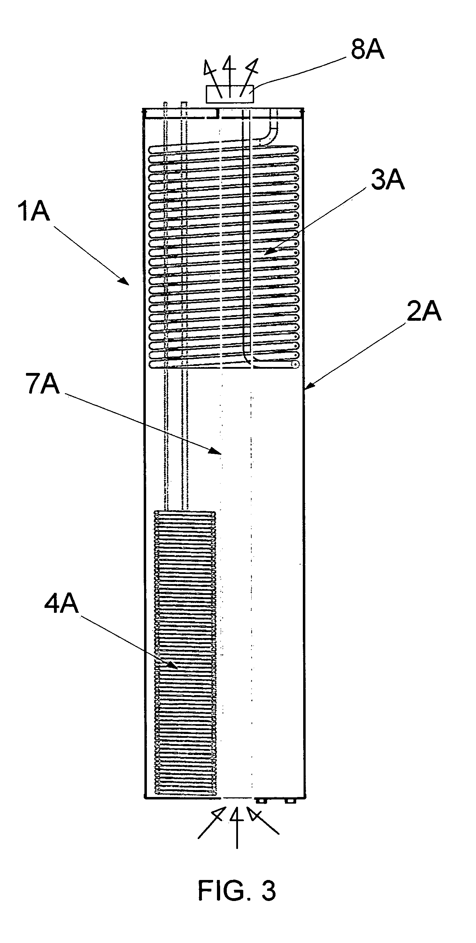

To that end, the radiator (1) is modified as shown in Figs. 3-7.

Fig. 3 illustrates a first embodiment of the radiator (1A) wherein the same numerals followed by letter "A" are used to indicate the same parts, omitting their detailed description.

The embodiment of radiator (1A) is designed for forced heating of ambient air: In this embodiment the radiator (1A) comprises an air conduit (7A) and a fan (8A).

The air conduit (7A) passes through the storage tank (2A), for example in vertical direction, and is in thermal contact with the hot water inside it, so that ambient air is taken from below, heated by forcing it into such conduit (7A), and then discharged from above by means of the fan (8A).

In such a case, the radiator (1A) can be advantageously used to heat a room, such as a bathroom, also in periods of the year when the heating installation of the house is not working.

Moreover, according to some advanced configurations, the radiator (1 A) comprises a convective fan (8A), a hot air outlet with adjustable flow in terms of direction and delivery, and an ambient thermostat with probe (for example, with remote control and/or timer).

Obviously, instead of only one air conduit (7A), two, three or more conduits may be provided.

Advantageously, the hot air jet can be directed to rapidly dry laundry, thus becoming a dryer in this application.

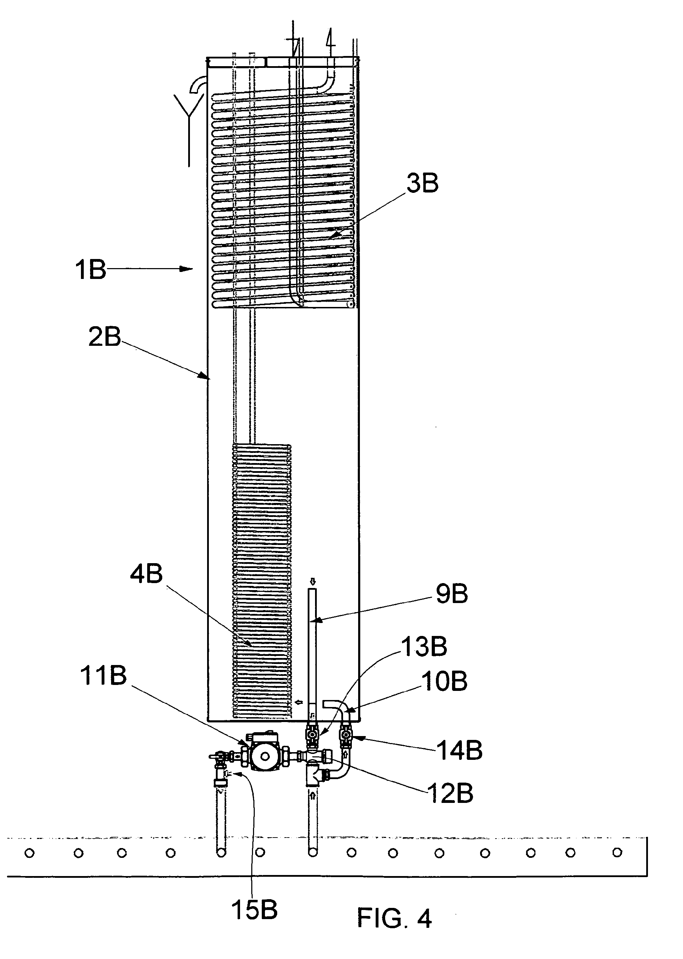

Fig. 4 illustrates a second embodiment of the radiator (1 B) wherein the same numerals followed by letter "B" are used to indicate the same parts, omitting their detailed description.

In this example, the radiator (1 B) is shown without the third coil, although the same may be optionally provided.

In such a version, the radiator (1 B) comprises a delivery conduit (9B) and a return conduit (10B) of the fluid, connected to the storage tank (2B) in order to take some hot water contained in it, which can be directed to one or more utilities. In particular, in the version shown in Fig. 4, the radiator (1 B) is connected to a floor heating system.

Both conduits (9B and 10B) enter from the bottom of the tank (2B), extend inside it and open at different heights. In particular, the delivery conduit (9B) opens at a higher height than the return conduit (10B) so that the water taken from the tank (2B) is sufficiently hot.

The delivery conduit (9B) is then connected to a circulation pump (11 B) and the two conduits (9B and 10B) are cut off by corresponding shut-off valves (13B,14B).

Downstream the pump (11 B) a mixer valve with fixed point (12B) is mounted, and possibly a safety thermostat (15B) and/or a manifold for the different areas of a floor heating system that used the hot water taken from the tank (2B) and conveyed into it by means of the pump (11 B).

Optionally, said realization comprises an ambient thermostat with probe (for example, with remote control, timer, either automatic or manual).

This version is especially suitable to heat small apartments with floor heating systems.

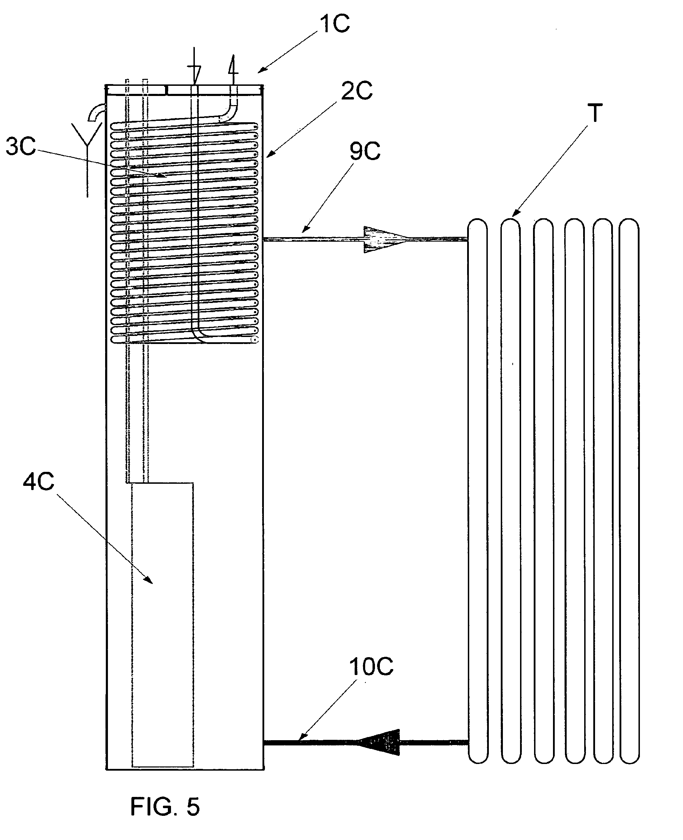

Fig. 5 illustrates a third embodiment of the radiator (1 C) wherein the same numbers followed by letter "C" indicate the same parts, omitting their detailed description.

Also in this example, the radiator (1 C) is shown without third coil and convective pipe, but the same may be in any case optionally provided, either alone or in combination.

In this case the delivery conduit (9C) enters the thermo-siphon (T) on the side, at a higher height than the return conduit (10C), which is connected to the bottom of the tank.

In such a case, the radiator (1 C) is connected to a traditional thermo-siphon (T) without the need to use pumps, taking advantage of the normal water circulation determined by the different density further to the different temperature in the various layers of the tank (2C).

Eventually, downstream the delivery conduit (9C) a manifold is provided for connection with a plurality of thermo-siphons (T).

Also in such a version, the radiator (1C) optionally comprises an ambient thermostat with probe (for example with remote control and timer) and manual or automatic shut-off valves.

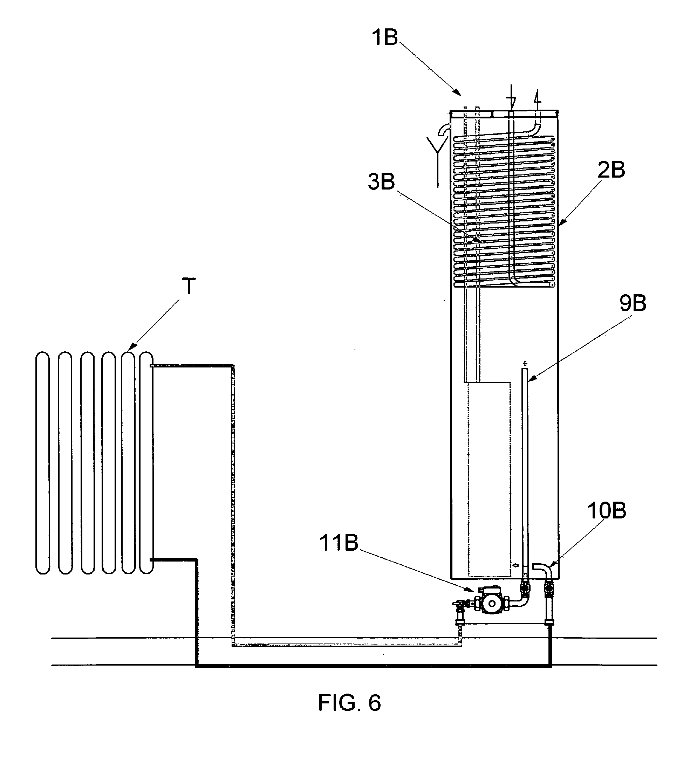

Obviously, it is possible to feed traditional thermo-siphons (T) also by forcing water with a pump (11 B), as shown in Fig.6. In such a case, the radiator is of the same type as the one described for Fig. 4, thus omitting a detailed description.

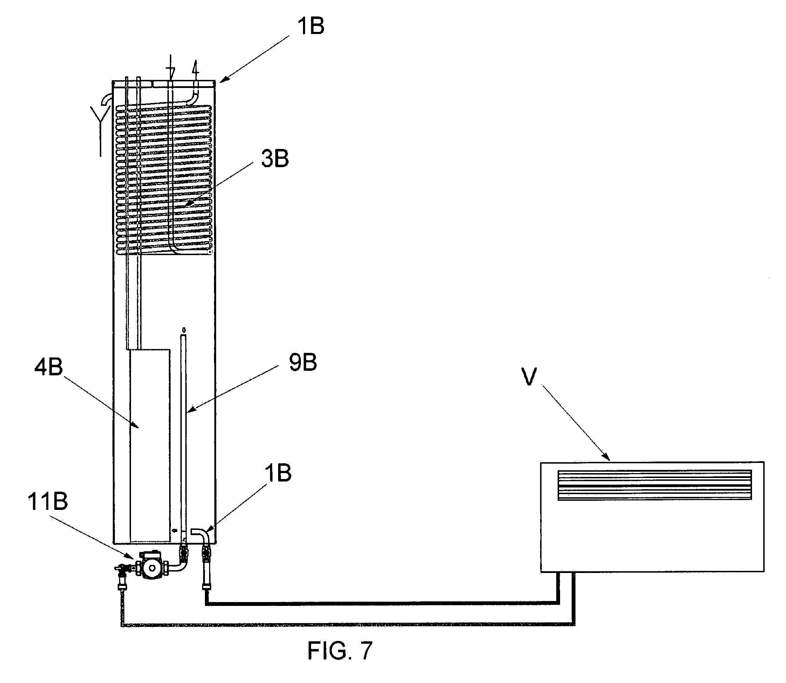

Likewise, it is also possible to feed a fan coil of known type (V), instead of a thermo-siphon, as shown in Fig. 7.

In view of the above, it can be noted that, unlike traditional radiators, the radiator (1,1A,1B,1C) according to the present invention has several advantages. For example, it contains a large quantity of water (> 80 liters) and can be also used either as air exchanger of convective tube type and radiation type, in order to heat domestic or different ambient.

Moreover, it produces a large amount of hot domestic water with built-in dynamic exchanger.

Basically, unlike the solutions of the prior art, the accumulation of a considerable volume of water inside it guarantees excellent multifunctionality and, unlike known boilers, the presence of a large volume of hot water inside it guarantees excellent thermal flywheel that provides hot domestic water in a very short time.

Additionally, it basically has the same advantages when it is used to feed a heating system directly, such as a floor heating system or a radiator system with circulation pump and thermoregulating valve or with hot air with dynamic accelerator (fan/s)

According to a preferred embodiment of the present invention, the radiator (1,1A,1B,1C) has a shape with one prevailing dimension and is installed in vertical position (in such manner that the prevailing dimension is perpendicular to the ground).

This makes it possible to use the water head to feed in a natural (not forced) way utilities, such as radiators, fan coils or the like, situated at lower height.

Having a large amount of water and being installed in the rooms to be heated, the radiator (1,1A,1B,1C) can be the distribution center of the heat transfer fluid, since its vertical shape creates the correct water head at the circulation pump and favors air ejection from the fluid distribution circuits.

Moreover, the radiator (1,1A,1B,1C) is maintained at atmospheric pressure and therefore does not require the installation of expansion vessels and air vent valves or other safety criteria (such in the case of pressurized vessels).

The radiator (1,1A,1B,1C) also allows for feeding one or more radiators without circulation pump of the heat transfer fluid (with no distribution electricity and no circulator noise).

The vertical development allows having the correct piezometric increase to obtain good water circulation inside peripheral radiators.

Moreover, the radiator (1,1A,1B,1C) simplifies air ejection from the circuits of the heating system connected to it (either fan coils, radiators or floor system), thus almost completely eliminating fluid circulation noise.

In fact, all fluid circulation pipes are at a lower piezometric level than the height of the free water surface of the radiator (1,1A,1B,1C) and therefore air bubbles that may be pushed inside the radiator (this being a calm area for the fluid) can reach the free water surface and be naturally released in the atmosphere.

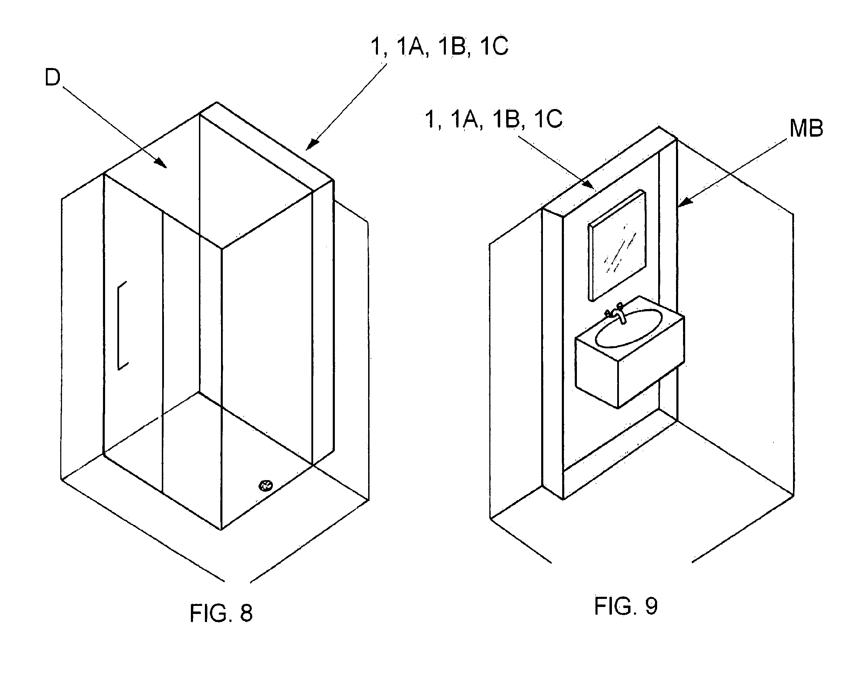

Finally, according to an additional embodiment shown in Fig. 8, the radiator (1,1A,1B,1C) is installed on the lateral wall of a shower tray or, in Fig. 9, behind a sink, thus becoming an interior decoration element.

A further object of the present invention is a heating system that uses a radiator as illustrated above.

## Claims

1. Radiator (1,1A,1B,1C) comprising a storage tank (2,2A,2B,2C) , a first (3,3A,3B,3C) and a second (4,4A,4B,4C) thermal exchange coil housed in said storage tank (2), said first coil (3,3A,3B,3C) being for hot domestic water and said second coil (4,4A,4B,4C) being suitable to be part of a circuit of a heat pump (PC).

2. Radiator (1,1A,1B,1C) as claimed in claim 1, **characterized in that** said second coil (4,4A,4B,4C) coincides with a condenser of said circuit of said heat pump (PC).

3. Radiator (1,1A,1B,1C) as claimed in claim 1 or 2, **characterized in that** it comprises a third (5) coil for heat transfer fluid coming from a heat source.

4. Radiator (1 A) as claimed in claim 1, 2 or 3, **characterized in that** it comprises:
- one or more air conduits (7A) passing through said tank (2A);
- a fan (8A) situated along said air conduit (7A) to generate an air flow in heat exchange condition with the fluid contained in said storage tank (2A).

5. Radiator (1B,1C) as claimed in any one of the above claims, **characterized in that** it comprises a delivery conduit (9B,9C) and a return conduit (10B,10C) for a fluid contained in said storage tank (2B,2C); said delivery conduit (9B,9C) and said return conduit (10B,10C) being connected to said storage tank (2B,2C) at different heights.

6. Radiator (1 B) as claimed in any one of the above claims, **characterized in that** it comprises a pump (11 B) connected to said delivery conduit (9B).

7. Radiator (1,1A,1B,1C) as claimed in any one of the above claims, **characterized in that** said storage tank (2,2A,2B,2C) has useful internal volume from 80 to 360 liters, preferably 130 liters.

8. Heating system **characterized in that** it comprises a radiator (1,1A,1B,1C) as claimed in any one of the above claims.

9. Heating system as claimed in the above claim, **characterized in that** it comprises a heat pump (PC) operatively connected to said second coil (4,4A,4B,4C).

## Patentansprüche

1. Heizelement (1,1 A,1 B,1 C) umfassend einen Speichertank (2,2A,2B,2C), eine erste (3,3A,3B,3C) und eine zweite (4,4A,4B,4C) Wärmeaustauschschlange, die in dem Speichertank (2) untergebracht sind, wobei die erste Heizschlange (3,3A,3B,3C) für Sanitär-Warmwasser und die zweite Heizschlange (4,4A,4B,4C) dazu geeignet ist, Teil eines Kreislaufs einer Wärmepumpe (PC) zu bilden.

2. Heizelement (1,1A,1B,1C) nach Anspruch 1, **dadurch gekennzeichnet, dass** die zweite Heizschlange (4,4A,4B,4C) mit einem Kondensator des Kreislaufs der Wärmepumpe (PC) übereinstimmt.

3. Heizelement (1,1A,1B,1C) nach Anspruch 1 oder 2, **dadurch gekennzeichnet, dass** es eine dritte Heizschlange (5) für die von einer Heizquelle kommende Wärmeübertragungsflüssigkeit umfasst.

4) Heizelement (1 A) nach Anspruch 1, 2 oder 3, **dadurch gekennzeichnet, dass** es Folgendes umfasst:
- eine oder mehrere Luftleitungen (7A), die durch den Tank (2A) hindurchlaufen;
- einen Ventilator (8A), der entlang der Luftleitung (7A) angeordnet ist, um einen Luftstrom während des Wärmeaustauschs mit der in dem Speichertank (2A) enthaltenen Flüssigkeit zu erzeugen.

5. Heizelement (1B,1C) nach einem der vorstehenden Ansprüche, **dadurch gekennzeichnet, dass** es eine Speiseleitung (9B,9C) und eine Rücklaufleitung (10B,10C) für eine in dem Speichertank (2B,2C) enthaltende Flüssigkeit umfasst, wobei die Speiseleitung (9B,9C) und die Rücklaufleitung (10B,10C) auf unterschiedlichen Höhen an den Speichertank (2B,2C) angeschlossen sind.

6. Heizelement (1 B) nach einem der vorstehenden Ansprüche, **dadurch gekennzeichnet, dass** es eine Pumpe (11B) umfasst, die an die Speiseleitung (9B) angeschlossen ist.

7. Heizelement (1,1A,1B,1C) nach einem der vorstehenden Ansprüche, **dadurch gekennzeichnet, dass** der Speichertank (2,2A,2B,2C) ein Nutzvolumen von 80 bis 360 Liter, vorzugsweise von 130 Liter besitzt.

8. Heizsystem, **dadurch gekennzeichnet, dass** es ein Heizelement (1,1A,1B,1C) nach einem der vorstehenden Ansprüche umfasst.

9. Heizsystem nach dem vorstehenden Anspruch, **dadurch gekennzeichnet, dass** es eine Wärmepumpe (PC) umfasst, die mit der zweiten Heizschlange (4,4A,4B,4C) wirkverbunden ist.

## Revendications

1. Radiateur (1,1A,1B,1C) comprenant un réservoir accumulateur (2,2A,2B,2C), un premier (3,3A,3B,3C) et un second (4,4A,4B,4C) serpentins d'échange thermique logés dans ledit réservoir accumulateur (2), étant ledit premier serpentin (3,3A,3B,3C) pouvant être parcouru par de l'eau chaude sanitaire et ledit second serpentin (4,4A,4B,4C) apte à faire partie d'un circuit d'une pompe à chaleur (PC).

2. Radiateur (1,1A,1B,1C) selon la revendication 1, **caractérisé en ce que** ledit second serpentin (4,4A,4B,4C) coïncide avec un condenseur dudit circuit de ladite pompe à chaleur (PC).

3. Radiateur (1,1A,1B,1C) selon la revendication 1 ou 2, **caractérisé en ce qu'**il comprend un troisième (5) serpentin pouvant être parcouru par un fluide caloporteur provenant d'une source de chaleur.

4. Radiateur (1 A) selon la revendication 1, 2 ou 3, **caractérisé en ce qu'**il comprend :
- un ou plusieurs conduits pour l'air (7A) qui traversent ledit réservoir (2A) ;
- un ventilateur (8A) positionné le long dudit conduit d'air (7A) pour générer un débit d'air en condition d'échange thermique avec le fluide contenu dans ledit réservoir accumulateur (2A).

5. Radiateur (1B,1C) selon l'une quelconque des revendications précédentes, **caractérisé en ce qu'**il comprend un conduit de distribution (9B,9C) et un conduit de retour (10B,10C) pour un fluide contenu dans ledit réservoir accumulateur (2B,2C) ; ledit conduit de distribution (9B,9C) et ledit conduit de retour (10B,10C) étant connectés au dit réservoir accumulateur (2B,2C) à des cotes différentes.

6. Radiateur (1B) selon l'une quelconque des revendications précédentes, **caractérisé en ce qu'**il comprend une pompe (11B) connectée au dit conduit de distribution (9B).

7. Radiateur (1,1A,1B,1C) selon l'une quelconque des revendications précédentes, **caractérisé en ce que** ledit réservoir accumulateur (2,2A,2B,2C) a un volume utile interne compris entre 80 et 360 litres, préférablement 130 litres.

8. Installation de chauffage **caractérisée en ce qu'**elle comprend un radiateur (1,1A,1B,1C) selon l'une quelconque des revendications précédentes.

9. Installation de chauffage, selon la revendication précédente, **caractérisée en ce qu'**elle comprend une pompe à chaleur (PC) connectée de manière opérationnelle au dit second serpentin (4,4A,4B,4C).
